Europäisches Patentamt

European Patent Office

Office européen des brevets

(11) Publication number: **0 362 913**

**A1**

## (12) EUROPEAN PATENT APPLICATION

(21) Application number: 89202186.6

(22) Date of filing: 30.08.89

(51) Int. Cl.5: **F24F 11/047** , G05D 7/01

(30) Priority: 06.09.88 NL 8802196

(43) Date of publication of application:
**11.04.90 Bulletin 90/15**

(84) Designated Contracting States:
**BE DE FR GB IT LU NL SE**

(71) Applicant: NEDERLANDSE ORGANISATIE VOOR TOEGEPAST-NATUURWETENSCHAPPELIJK ONDERZOEK TNO
Juliana van Stolberglaan 148
NL-2595 CL The Hague(NL)

(72) Inventor: Knoll, Bas
Langebroekweg 2
NL-2671 PR Naaldwijk(NL)

(54) **Self-regulating register.**

(57) Self-regulating register, which, at changing pressure differences over the register, lets through a constant, pre-set air flow. The opening is adjustable with the help of a hinged, highly sensitive valve (3), balanced with counter weights (7), which encounters, at increasing deflection, a counter momentum which is produced by, for instance, elastic cogs (8), or by means of a leaf spring (8a).

Figuur 6

## Self-regulating register.

The invention deals with a self-regulating register, equipped with a regulating organ that allows the register to let through, at changing pressure differences, a constant, pre-set air flow, with a high sensitivity.

Such a register is exposed to pressure differences as a result of wind, differences between inside and outside temperatures, fans (when present), and a number of other factors. Regulating is only worthwhile if air is supplied through the register. The differences in pressure on the weather-side (when supplied) in an average home vary between 1 and 20 Pa during 90% of the time.

If the culvert opening is constant, the volume flow through the register varies by about a factor of 5. By closing the culvert opening increasingly with an increasing pressure, starting at about 0.5 Pa, the volume flow can be kept constant at a chosen value. Leaks in the shell of the house however, also let through a volume flow of air which increases with the difference in pressure. This has to be compensated for by the register, in order to keep the total volume flow through register and leaks constant.

Under the influence of over-pressure on the housefront, air enters through the outside grid (1) into the front chamber (2). By this, over-pressure is built up on the entrance side of the valve (3) compared to the chamber (4) behind the valve. The difference in pressure between chambers 2 and 4 ($\Delta_{p2-4}$) causes a deflection ($\alpha$) of valve (3), which is suspended from blade hinges (5). The flow-through area between valve (3) and bottom plate (6) contracts because of this from $A_o$ to A. Also, the pressure difference ($\Delta_{p2-4}$) causes a rate of flow (v) in the diameter (A).

As the pressure difference over the grid and thus over the valve ($\Delta_{p2-4}$) increases, the flow-through area (A) decreases and the rate of flow (v) increases. The product A x v, multiplied by a contraction factor ($\mu$), depending on its design, is the rate of flow let through ($q_v$). The aim is to combine the deflection of the valve ($\alpha$) with the pressure difference ($\Delta_{p2-4}$), so that such a relation occurs between the rate of flow let through ($q_v$) and the pressure over the register, that it is kept constant. For this, a high sensitivity of the valve (3) is necessary, or a small counter momentum for its deflection. This can be done by making the valve thin, using light materials. The drawback however is that insufficient suppression occurs of the changes in pressure seen in practice, and that the rigidity of the valve is small. This is harmful for, for instance, the life span and the noise it produces. To overcome this difficulty, the valve (3) is made of 1 mm thick aluminum sheet and equipped with a counter-weight (7) above the blade hinges (5). The mass inertia of this combination provides the necessary suppressing abilities. Of course the counter-weight (7) can, in practice, consist of a number of counter weights.

Valve (3) and counter-weight (7) are balanced so that from pressure differences over 0.5 Pa over the register, a deflection ($\alpha$) occurs. This high sensitivity has the advantage that for the bottom plate (6), a simple, flat shape can be chosen.

The drawback however is that the valve (3) has its maximum deflection ($\alpha$ = 35°) at a far lower pressure difference than the desired range of 20-40 Pa (depending on the leaks of the house).

In order to get the desired regulating range, with an increasing deflection ($\alpha$) an increasing counter momentum is put on the valve (3). With the current prototype, this is done with elastic cogs (8), touching the top side of the casing (9). The elastic cogs are set so that as the deflection ($\alpha$) increases, more cogs touch the top, while the points of contact come ever closer to the hinge point (5). With this, an excessive deflection by extreme pressure fluctuations is suppressed.

By upward and downward movements of the adjustment arm (10), the connected arms (11) on which the bottom plate (6) rests, hinge at point (14). This way, at a constant deflection ($\alpha$), the flow-through area (A) and thus the air flow let through are enlarged or reduced. While setting the ventilation need the opening under the bottom plate (6) changes. To overcome this, the opening is sealed with a rubber flap (12). Basically, the ventilation can be set analogous between zero and a value to be chosen. For example: the standard value for a room containing two people is, for instance, 14 $dm^3$/sec. The positions 0 (closed), 1, 2, etc. are preset positions. For example, an elastic ball from the adjustment arm (10) is pushed in pre-punched holes in the adjacent side of the casing. Also, the valve is pushed against sealing edges on the side of the casing and against the bumper (13). In this way, total sealing of the register can be attained in order to prevent annoying noise, produced when it storms, for instance.

The sealing rubbers on a normally functioning register, as well as the elastic cogs (8), prevent an excessive deflection by extreme pressure fluctuations, if they are not suppressed by the mass inertia. The sealing rubbers also keep the flow-through area at its maximum opening when the pressure difference over the register turns around. The ventilation of rooms on the lee-side has been proved to diminish the least this way.

On an practical example of a register according to the invention, measurements have been taken. For this, the register is put in the opening of a wooden case, connected to a small wind tunnel. This way, with the help of a fan, pressure differences over the register can be generated and the rate of flow let through can be measured with the help of a measuring device in the wind tunnel. The register can be set for 1 or 2 people in a room, for instance, and then the corresponding register characteristic can be determined.

During the setting of the register no counter momentum with the elastic cogs is put on the valve at first. In this situation the counter-weight is adjusted to the weight of the valve so, that the weight difference is just enough to overcome the hinge friction when the pressure difference ceases, so that the valve is put back into its resting position (vertical). The valve proves sensitive enough to regulate starting from a pressure difference of 0.5 Pa, without a measurable hysteresis ( = difference between rising and falling regulation). Also, the hinge friction concerned appears to increase by the friction of the valve and the suspension of the hinges. This can be prevented by a better detailing of the suspension points.

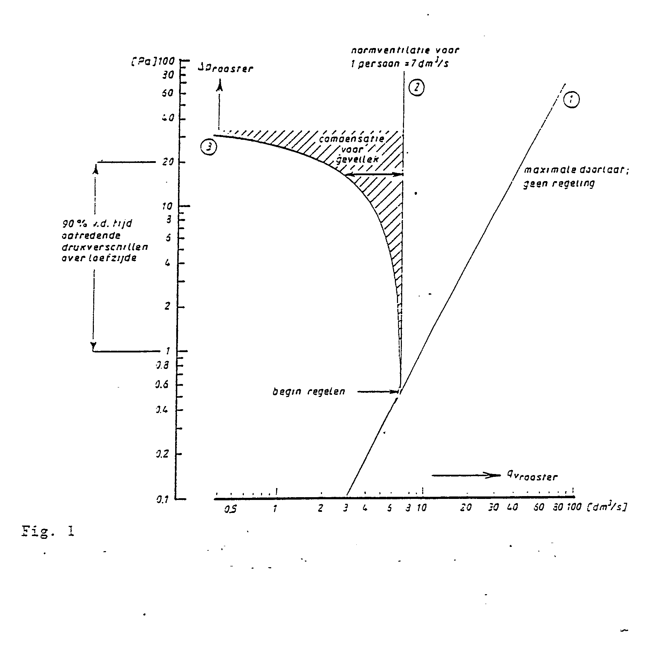

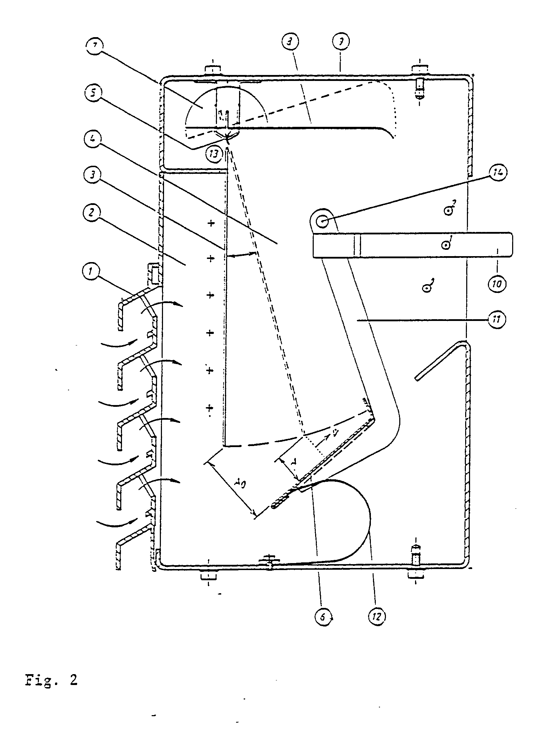

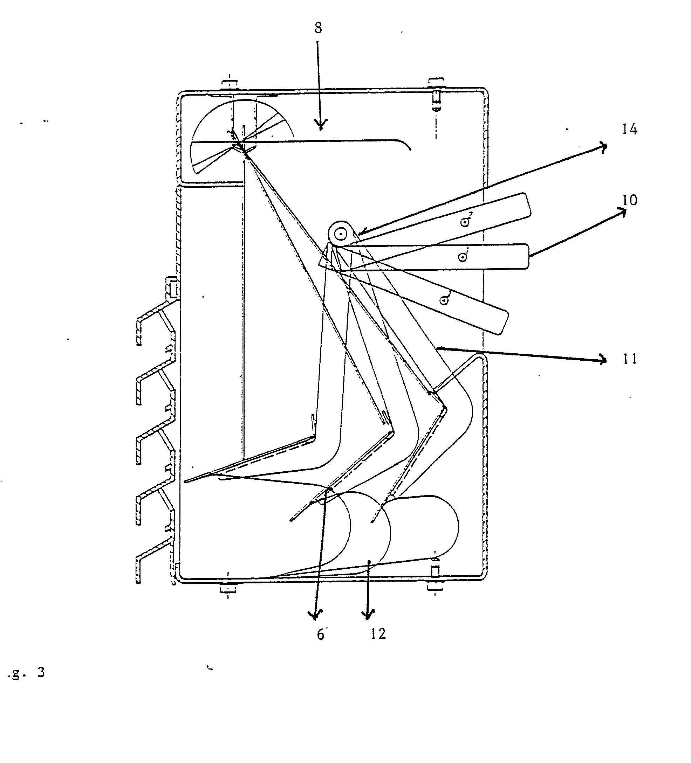

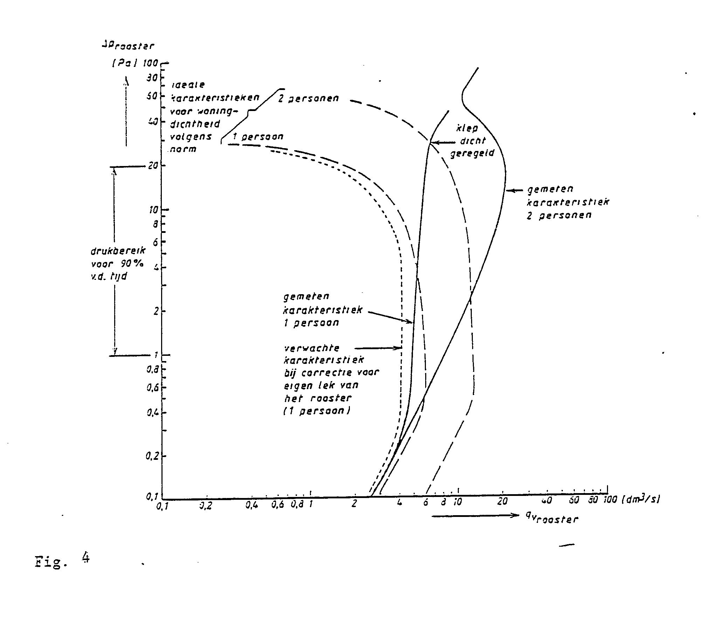

Then, the elastic cogs are installed. The register is set to the ventilation standard for one person (7 dm³/sec). In this position, the elastic cogs are tried to be set so, that a register characteristic is obtained which corresponds to the ideal characteristic according to fig.1 as much as possible. The result is shown in fig.4. The characteristic which occurs when setting it for 2 people is shown as well.

Apart from measurements to determine the adjustment of the register and the register characteristic, tests have been done concerning the damping abilities of the register. The pressure differences in practice show considerable fluctuation at varying frequencies. The moving valve has to be kept from reacting too strongly to this fluctuation which causes quick wear and noise production (clattering). To test the damping, the register has been exposed to the most extreme pressure fluctuations seen in practice. The pressure fluctuations are generated with the help of a sealable extra opening in the casing in which the register is put. The pressure fluctuations originate by, slowly or quickly, closing and opening the mentioned opening in part or totally. The pressure fluctuations over the register are recorded with an electric pressure recorder.

The reactions of the valve to extreme pressure fluctuations as can be seen in practice, prove to be very good. Erratic movement of the valve, as well as noise production, was not noticed.

When setting the register for one person the tested prototype proves to give a reasonably constant ventilation ($q_v$ = 5-6 dm³/sec) in the main range of 1-20 Pa. Back-regulating however at higher pressures, connected to leak compensation, proves not to occur.

The reason for this is the excessive leak of the register itself. At 28 Pa the register proves to be regulated shut and still let through 6.5 dm³/s. The ideal register characteristic for one person however shows that at 28 Pa only 0.3 dm³/s is allowed.

The leak of the register, regulated shut, is caused by the too-large space between the counter-weight and the top of the register casing and at the hinge points.

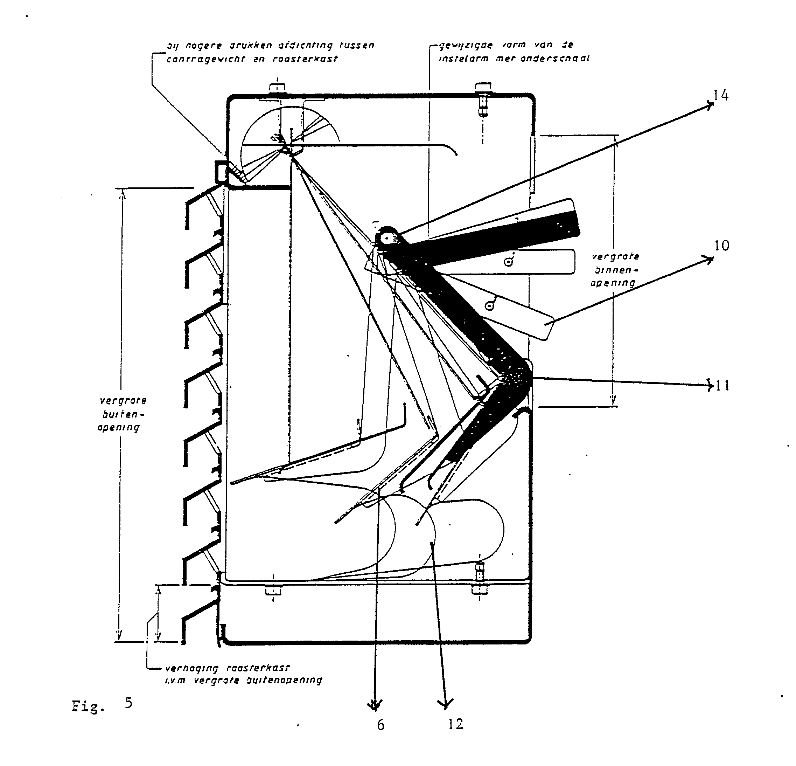

When the leak of the register is brought back to the desired 0.3 dm³/s at 28 Pa, a corrected register characteristic is obtained, without further changes, as shown in fig.5 with the dotted line. This characteristic shows considerable likeness to the ideal characteristic. The difference is that the rates of flow let through, over the total range fall behind the desired values a little. This can be corrected easily by changing the setting point of the bottom plate some.

The register characteristic, occurring when the same register set-up is set for 2 people, differs from the ideal characteristic even more (see fig. 4). The characteristic, with small pressure differences, coincides with the characteristic for one person. From this it can be concluded that in spite of the larger flow-through opening between the valve and the lower plate, no extra air is let through. This is caused by a too-small net inlet of the outside grid as well as the inlet opening through which the air enters or leaves the register casing. The deviant characteristic at larger pressure differences is influenced somewhat by the excessive leak of the register itself. The main reason however seems to be the wrong position of the bottom plate. at least at the present adjustment of the elastic cogs on the one-person presetting. Increasing the steepness of the bottom plate proves to improve the characteristic for two people. This can be done by moving the hinge point (9) about 4.5 cm down. This however, now enters the deflecting range of the valve. The constructive design has to be changed.

The register characteristic for two people however, proves not to be optimal, even with such an adjustment. The air flow let through at the medium pressures is too high, at high pressures it is too low. In order to correct this, the bottom plate has to get a curve which should disappear when set for one person. Even though this is possible construction-wise, a solution is preferable where the shape of the bottom plate is fixed. This makes for easier construction and a better reproducible register characteristic. To get a fixed shape of the bottom plate, the counter momentum put on the valve by the elastic cogs, is diminished. To attain the same pressure range, the valve deflects more. In that situation the bottom plate is too short, so it is made longer in the direction the valve deflects. On the other hand, the plate is shortened on the other side and a small downward curve is put on the end. This shortening, especially when set for two people, increases, as desired, the air flow let through at pressure differences up to 2 Pa. The curve at the end of the plate promotes an even inlet and keeps the closed valve from slipping beside the bottom plate.

The production of the changed bottom plate and the change in shape of the adjustment arm that goes with it are shown in fig.5. In that figure, the positions of the bottom plate for setting it for one or two people are also shown.

Also, the following constructive adaptations, mentioned before, are shown:
- sealing of the leak opening between counter-weight and register casing;
- enlargement of the in- and outlet with the adaptations to the register casing that go with it.

As a possible leak sealing, in fig. 5 a brush sealant on the counter-weight is shown that works from a pressure difference of 4 Pa and improves as the pressure difference increases. Especially at high pressure differences the sealing becomes important. The increasing of the friction of the sealing with the pressure difference may be favorable. The damping abilities of the valve are enlarged while the higher forces contain hysteresis at higher pressures.

After the sealing between the counter-weight and the casing, further attention has to be paid to the sealing of the closed valve and the suspension points of the valve.

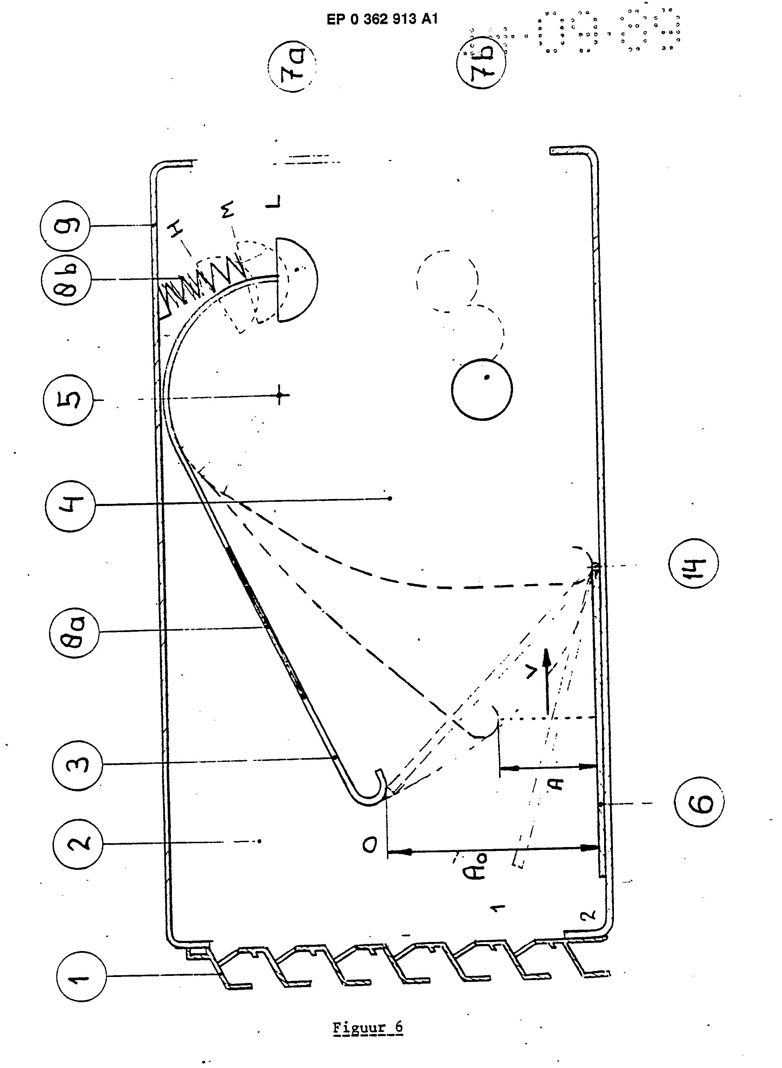

Another version according to the same principle is given in fig. 6. This deals with another height/width ratio, fit for installation in limited spaces. Through the outside grid (1), air again enters the front chamber (2) and causes an overpressure (+) on the valve (3) compared to the inner chamber (4). Because of the pressure difference the valve, which is suspended on hinges, turns around hinge point (5). The flow-through area ($A_o$) under the valve diminishes (A), as well as with the previous version, and causes a constant rate of flow. The bent upper part of the valve causes the sealing in the upper part of the valve and the top plate of the casing (9).

In order to balance the valve, counter-weights have been added (7a and 7b). These are part of the system that hinges around point (5) and, by their weight, cause the necessary mass inertia.

With this version also, it is necessary that as the deflection increases, a counter force is exerted on the valve. Instead of elastic cogs, this momentum is given by the leaf spring (8a) which is part of the valve (3), and by spring (8b). Spring (8b) is activated at medium pressures (position M) and at high pressures (great deflection of the valve, position H) is totally pushed in. The valve then cannot hinge around (5), so that regulation at high pressures only takes place by bending the bottom part of the valve around leaf spring (8a), which is then especially activated. This has the advantage that, as well as with the previous version, the valve is regulated shut at a tangent with the bottom plate (6). The turning of the angle of the (bottom side of the) valve for closing completely is therefore relatively large, which is advantageous for the accurateness of the regulation.

Recapitulating, three main stretches can be distinguished in the regulation:
- The low-pressure stretch, where no springs are activated and the valve hinges freely;
- The medium-pressure stretch, where a limited counter momentum is put on the valve, mainly by spring (8b);
- The high-pressure stretch where the valve does not hinge anymore and only the bottom part moves by bending around the leaf spring (8a).

In this way, the same function is obtained as in the previous version by the grip of more or less elastic cogs.

In this version, the allowed rate of flow can be pre-set on 0 (closed), 1 or 2 people, by adjusting the bottom plate (6) which hinges around (14).

After the last version described, a somewhat different version can be foreseen. In this version, a back-up valve is applied which, about the position of the counter weight (7b), is set perpendicular to the direction of the flow, and which is part of the system that hinges around point (5). The function of this back-up valve is to enlarge the sensitivity of the point of action, especially at low pressures. By the steeper position which occurs when turning around (5), and the 'shadow-function' of the main valve which occurs then, the contribution at medium pressures will be limited, at high pressures it will be nil.

## Claims

1. Self-regulating register, equipped with a regulating organ that allows the register to let through, at changing pressure differences, a constant, preset air flow, with a high sensitivity, for which the regulating organ is constructed of aluminum with a thickness of 1 mm, and is equipped with a counter-weight (7) on the other side of the hinges (5).

2. Self-regulating register, according to claim 1, with a flat bottom plate (6).

3. Self-regulating register, according to claims 1 or 2, with which a force is exerted on the valve (3), directed against the direction of the deflection, which force increases as the deflection increases.

4. Self-regulating register, according to claim 3, with which the force countering the deflection is generated with the help of elastic cogs (8).

5. Self-regulating register, according to claim 3, with which the force countering the deflection is generated with the help of a leaf spring (8a) in the valve (3) and a spring (8b) against the counter weight.

6. Self-regulating register, according to claim 4, with which the momentum, caused by the counter force, is adjustable by adjusting the angle with which the elastic cogs (8) touch the top, as well as by adjusting the number of cogs.

7. Self-regulating register, according to claim 4, with which the momentum, caused by the counter force, is adjustable by changing the quality of the springs (8a) and (8b).

8. Self-regulating register, according to claim 4 or 5, with which the position of the bottom plate (6) is adjustable, for instance with the help of an adjustment arm (10).

9. Self-regulating register, according to one of the previous claims, which can be set to different air flows with the help of a plate (6) and an adjustment arm (10).

10. Self-regulating register, according to one of the previous claims, equipped with a back-up valve behind valve (3).

Fig. 1

EP 0 362 913 A1

Fig. 2

.g. 3

Fig. 4

bij hogere drukken afdichting tussen contragewicht en roosterkast

gewijzigde vorm van de instelarm met onderschaal

vergrote binnen- opening

14

10

11

vergrote buiten- opening

vernaging roosterkast i.v.m. vergrote buitenopening

Fig. 5

6    12

Figur 6

EP 0 362 913 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-2 358 260 (SIMPSON) <br> * Page 1, column 2, line 5 - page 2, column 1, line 28; figures 1,5,9 * <br> --- | 1 | F 24 F 11/047 <br> G 05 D 7/01 |
| A | US-A-2 787 288 (SHATALOFF) <br> * Page 1, column 1, line 60 - column 2, line 30; figures 1-5 * <br> ----- | 1 | |
| | | | **TECHNICAL FIELDS SEARCHED (Int. Cl.5)** <br><br> F 24 F <br> G 05 D |

The present search report has been drawn up for all claims

| Place of search | Date of completion of the search | Examiner |
|---|---|---|
| THE HAGUE | 07-12-1989 | PESCHEL G. |